# EUROPEAN PATENT APPLICATION

(11) **EP 2 860 814 A1**
(43) Date of publication of application: **15.04.2015**
(21) Application number: 12878459.2
(22) Date of filing: 06.06.2012
(51) Int. Cl.: H01M 10/46, H02J 7/00

(54) **ELECTRICAL ENERGY ACCUMULATION DEVICE BASED ON A GAS-ELECTRIC BATTERY**

(71) Applicant: Tereshchenko, Dmitry Milanovich, Moscow 129075 (RU)
(72) Inventor: Tereshchenko, Dmitry Milanovich, Moscow 129075 (RU)
(74) Representative: Sloboshanin, Sergej
(86) International application number: PCT/RU2012/000441
(87) International publication number: WO 2013/184017

(57) **Abstract**

A device for the accumulation of electrical energy contains a gas-electric battery comprising a hollow housing, partially filled with an electrolyte solution, and electrodes, positioned inside the hollow housing and made of a conductive adsorbent of the electrolysis gases. The electrodes are divided by a gas-permeable separator. Current-collectors linked to the electrodes are connected to a charge-discharge converter designed to allow for a periodic change in the polarity of the charge current during the charging process. The device makes it possible to provide a long operating life with minimal environmental pollution.

## Description

### Technical field

The invention pertains to the field of electrotechnology, in particular to secondary chemical sources of electricity, and can be used for industry and household applications.

### Prior art

A large number of electrochemical energy batteries are known which can be used either independently or together with different primary electricity generators: photovoltaic cells, wind generators and other such devices, to even out peaks of demand on power grids by users. In the latter case the battery is charged from the net and releases power into the load during peaks of demand.

One of the known battery types are the so-called gas-electric batteries (see, for instance, RU 2056676 (C1), Arshinov et al., March 20, 1996), which have been widely described in literature. In an earlier publication (SU 48659, Akimushkin, July 12, 1935) a gas battery is described, the effect of which is based on the exploitation of a gaseous galvanic chain developing in a hermetically sealed housing filled with a solid gas-absorbing adsorbent. When a constant charge current passes between the electrodes, the electrolysis of the electrolyte, for instance a sodium chloride solution, causes a release of hydrogen and chlorine, which are absorbed by the adsorbent in the areas near the electrode. Correspondingly, hydrogen will be adsorbed in the area of the negative electrode and chlorine in the area of the positive electrode, in accordance with the reaction 2NaCl + 2H₂O → H₂ + Cl₂ + 2NaOH. When the electrodes are connected to the load, the reverse chemical reaction will take place: H₂ + Cl₂ + 2NaOH → 2NaCl + 2H₂O. The shortfalls of this battery are the clogging of the electrodes, resulting in a reduction of the electric capacity, and also the electrolyte deterioration due to an accumulation of NaOH. As a result, the lifetime of this kind of battery is in the order of 100 cycles. The limited lifetime makes it impossible to use this battery in industrial dimensions.

Devices for battery charging are known (see, for instance, SU 775816, Belonoshko et al., October 30, 1980; RU 2038672 C1, Gulyayev et al., June 27, 1995) using charge-discharge converters for electric energy accumulation systems. However, these devices are not designed for operation in a gas-electric battery, which is characterised by the slowness of the electrochemical reactions that occur, and do not solve the task of extending its lifetime.

### Disclosure of the invention

The task underlying this invention is to create a device for the accumulation of electrical energy based on a gas battery with a long operating life and minimum pollution of the environment.

The device for the accumulation of electrical energy comprises a gas-electric battery including a hollow housing partly filled with an electrolyte solution and electrodes positioned in the hollow space of the housing and made of a conductive adsorbent of the electrolysis gases. The electrodes are divided by a gas-permeable separator. Current-collectors linked to the electrodes are connected to a charge-discharge converter designed to allow for a periodic change in the polarity of the charge current during the charging process.

The conductive adsorbent can be chosen from a group including activated carbon, activated carbon black, activated graphite, colloidal carbon, pyrocarbon or a mixture thereof, whereas the electrolyte is an aqueous sodium chloride solution.

On the upper panel of the battery housing a protective valve and a valve for creating overpressure in the housing can be arranged, whereas under the upper panel of the housing an adsorbent layer is placed, separated from the electrodes by a separator. Nozzles for supplying and releasing the electrolyte can be arranged in the housing.

The charge-discharge converter comprises three filters, two of which are arranged at the entry and exit of the converter while the third is connected to the electrodes of the gas-electric battery, three pairs of symmetric two-way switches, a triple-wound transformer, a control unit activating a device for the formation of control voltages, and a control logic. Each of the filters is connected by one of its outlets to a pair of the two-way switches connected in-series to the ends of the winding, and by its other outlet to the centre of the windings, wherein the entry of the control unit is linked to sensors for the parameters of the gas-electric battery, while its control exit is linked to said switches. The sensors for the parameters of the gas-electric battery can activate sensors for voltage, current, temperature, pressure of the gases and the pH of the electrolyte solution.

### Short description of the drawings

The invention is explained by the drawings, wherein:
- Fig. 1: schematically shows the gas-electric battery;
- Fig. 2: is a flow chart of the charge-discharge converter in which the two-way switches are used.

### Best embodiment of the invention

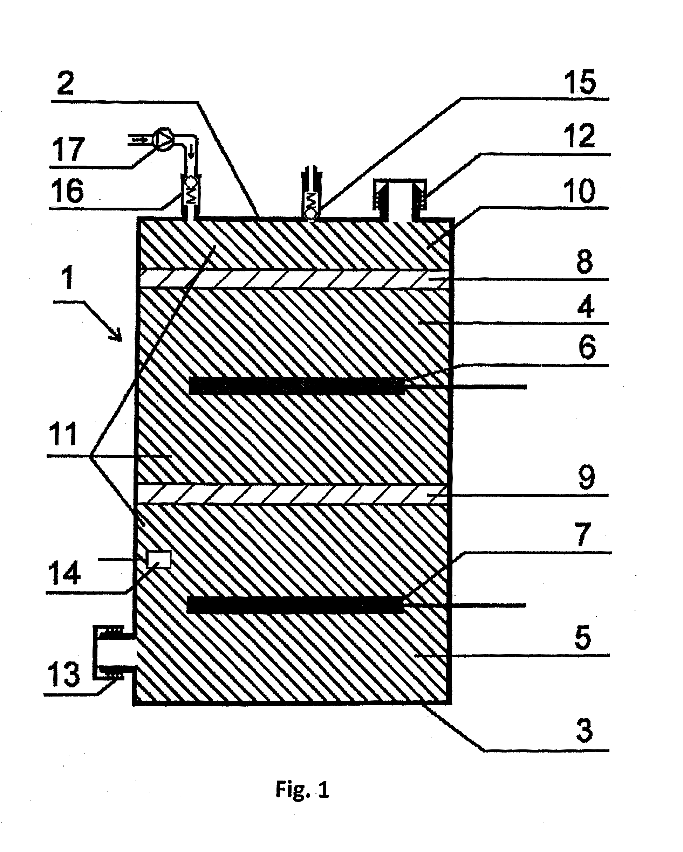

The basic scheme of the gas-electric battery used in the device for the accumulation of electrical energy according to this patent application is shown in Fig. 1. The battery 1 contains a hollow housing having an upper panel 2 and a floor panel 3, electrodes 4, 5 arranged in the hollow of the housing, which are made of a conductive adsorbent absorbing the gases that form during the electrolysis process. The conductive adsorbent is chosen from a group including activated carbon, activated carbon black, activated graphite, colloidal carbon, pyrocarbon or a mixture thereof. The outlet of the electric energy is carried out through current-collectors 6 and 7. The electrodes 4, 5 are separated from each other and also from the adsorbent by separators 8 and 9. To prevent gas leakages, an adsorbent 10 is arranged above the electrodes. The housing of the battery is filed with electrolyte 11. To supply and release the electrolyte 11, nozzles 12, 13 can be arranged in the battery housing. To check the function of the battery 1, sensors 14 for the parameters, namely voltage, current, temperature, the pressure of the gases and the pH of the electrolyte solution, can be arranged in it. On the upper panel 2 of the housing 1 a protective valve 15 and a valve 16 for creating overpressure in the housing, connected to a pump 17, are arranged.

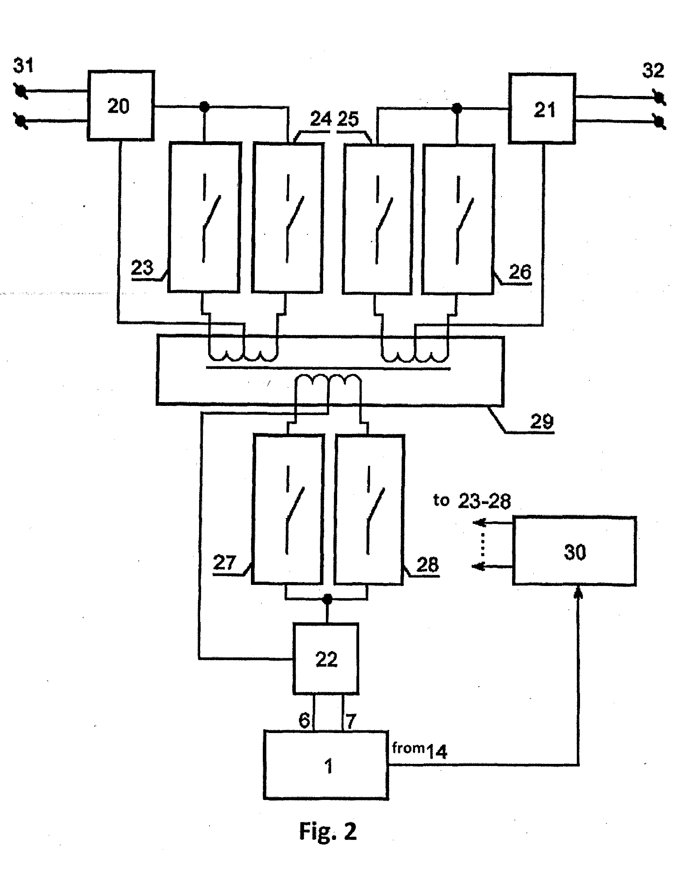

The functioning of the gas battery 1 can easily be realised within a charge-discharge converter, shown in the flow chart in Fig. 2. However, it needs to be noted that it is possible to use separate charge and discharge converters, switching over when the processes of charging and discharging are finished.

The charge-discharge converter can also fulfil the functions of a voltage stabiliser and consists of three filters 20, 21, 22, three pairs of symmetric two-way switches 23-24, 25-26, 27-28, a triple-wound transformer 29 and a control unit 30.

The two filters 20 and 21 are arranged at the entry 31 and the exit 32 of the converter, which is connected to the load, while the third one 22 is connected to the current-collectors 6 and 7 of the electrodes 4, 5 of the gas-electric battery. The control unit 30 includes the control logic and also the control voltage formation device for the switches 23-24, 25-26, 27-28. Each of the filters 20, 21 and 22 are connected by one of their outlets to the pair of two-way switches 23-24, 25-26 or 27-28 connected in series to the ends of the windings of the transformer 29, and with their other outlet to the centre of the respective winding. The entry of the control unit 30 is connected to sensors 14 for the parameters of the gas-electric battery, while its control exit is connected to said switches 23-24, 25-26, 27-28. The triple-wound transformer 29 provides a decoupling between the entry 31 and the exit 32 of the converter, which makes it possible to provide a charge and a discharge converter in the same device, and also to carry out a stabilisation of the exit voltage, to improve the power factor of the consumption from the source and to release excess power back into the entry mains. The operating frequency of the converter depends on the elements to be employed and can amount to between tens and hundreds of kilohertz. The filters 20, 21, 22 prevent a transfer of the frequency of the converter into the entry mains, to the load and to the battery, eliminate parasitic harmonics, provide the necessary impedance and provide a reduction in the level of electromagnetic interferences.

The device works as follows.

In the charging mode the entry voltage 31 is passed through the filter 20 to the switches 23, 24 functioning as a push-pull converter. By means of the transformer 29, the converted voltage passes to a synchronous rectifier provided on the switches 27, 28, and through the filter 22 it is passed to the battery 1, charging it. Simultaneously the converted voltage from the transformer 29 can be rectified by means of the switches 25, 26 which function as a pulsed voltage stabiliser, and through the filter 21 it can be passed to the exit 32 (exit voltage stabilisation mode).

In the discharging mode, the voltage from the battery 1 is passed through the filter 22 to the switches 27, 28, which convert this voltage into a high-frequency voltage. The converted voltage is taken from the transformer 29, rectified by the synchronous rectifier provided on the switches 25, 26, and through the filter 21 is passed to the exit 32. The switches 23, 24 can be either in a switched-off state or can work in converter mode, depending on the control pulses of the control unit 30, increasing the power at the exit (modes of equalising the demand peaks or correcting the power), or in synchronous rectifier mode (mode of returning a part of the power into the entry mains).

The switches 23-28 are controlled according to signals from the voltage formation device of the control unit 30, which includes the sensors 14 for the parameters of voltage, current, temperature, pressure of the gases and the pH of the electrolyte solution, and also the control logic.

In the charging mode the voltage from the source of energy (for instance, from a photovoltaic cell), which is passed to the entry 31 of the converter, is converted into a charge current passing through the current-collectors 6 and 7 to the electrodes 4 and 5. Under the influence of the electric current the electrolysis process takes place in the electrolyte 11. The solution of the electrolyte 11 dissolves, forming reaction products and releasing the gaseous components. When a sodium chloride solution is used as the electrolyte 11, the products hydrogen and chlorine are absorbed by the unwound surface of the electrodes 4 and 5, while in the electrolyte 11 sodium hydroxide (NaOH) is accumulated according to the following chemical reaction:

2NACl + 2H₂O ↔ H₂ + Cl₂ + 2NaOH

The battery capacity is defined by the surface area of the conductive adsorbent, for instance, activated carbon, forming a body of electrodes. When the battery is discharged, the adsorbent gases are released from the electrodes 4 and 5 and, joining the reaction with the sodium hydroxide, again form a sodium chloride solution. However, water insoluble salts (for instance, calcium salts and others) which are contained in the material of the electrodes 4, 5 and the electrolyte 11 can precipitate on the electrodes and reduce the sorption capacity, that is, the usable area of the electrodes, correspondingly reducing the electric capacity. Furthermore the hydrogen is retained by an electrode material which is essentially worse that chlorine, and after the discharging of the battery part of the chlorine remains in the electrode. When the polarity of the converter in the charging mode is changed, residues of the gases flow from the electrodes to the outside where they interact with a different gas which starts forming in the electrolysis process. The chemical reaction between the gases results in the formation of hydrochloric acid, which dissolves the water insoluble salts, thus cleansing the electrodes 4, 5. Part of the gases forming in the electrolysis process are released from the surface of the electrodes and accumulate under the top panel 2 of the housing 1. To prevent their leaking and, as a consequence, a deterioration of the properties of the electrolyte 11, an additional layer of adsorbent 10, for instance activated carbon, is arranged above the electrodes 4, 5. While it alternately (at the change of polarity) absorbs various gases, a chemical reaction occurs in it, wherein hydrochloric acid is formed, which is neutralised by alkali that forms during electrolysis. The resulting sodium chloride solution is used again in the electrolysis process. The degree of adsorption depends on the pressure. It is possible to increase the degree of adsorption and thus to increase the battery capacity by raising the pressure within the housing, to which end it is possible to use the valve 16 for creating an overpressure from the pump 17 within the housing.

To check the parameters of the battery, sensors can be arranged in it, measuring the basic exploitation parameters of the battery function, such as the temperature, the pressure, the pH, the number of activations of the protective valve, the electrolyte level. In the event of an overcharging of the battery, for instance in the event of a failure of the charge converter or a failure of the pressure sensor, the gas pressure within the housing 1 can rise above the permissible level. To prevent a destruction of the housing, the device can be provided with a protective valve 15. Information from the sensors can be transmitted to a service team to assess the necessity of maintenance or repair, which has a positive impact on the safety and lifetime of the device.

Experiments have shown that the relative accumulation capacity, defined as the relation of the actual value to the value in the first cycle, depending on the number of the "charging-discharging" cycle, for the device to be patented remains within the permissible boundaries for a number reaching several thousand cycles. Simultaneously, in a battery of identical construction it was reduced by a multiplicity of ten when the charging was done without changing the polarity of the charge current.

### Industrial applicability

The device can be applied in alternative electrical energies together with photovoltaic cells, wind generators and other, similar electricity generators, and also to even out peaks in demand of electric power by users of electricity grids, which enhances the effectivity of usage of existing electric power stations and electric power transmission lines, reduces the deficit in electric power, and makes it possible to avoid cyclic power cutoffs. The device can be carried out using traditional technologies, materials and element base and can withstand total discharges as well as quick charging with increased current without suffering damage, and is constructed in a simple way from readily available materials.

## Claims

1. Device for the accumulation of electrical energy, comprising a gas-electric battery including a hollow housing partly filled with an electrolyte solution and electrodes positioned in the hollow space of the housing and made of a conductive adsorbent of the electrolysis gases, a gas-permeable separator dividing the electrodes, current-collectors linked to the electrodes and connected to a charge-discharge converter, **characterised in that** the converter is designed to allow for a periodic change in the polarity of the charge current during the charging process.

2. Device according to claim 1, **characterised in that** the conductive adsorbent is chosen from a group including activated carbon, activated carbon black, activated graphite, colloidal carbon, pyrocarbon or a mixture thereof.

3. Device according to claim 1, **characterised in that** the electrolyte solution is an aqueous sodium chloride solution.

4. Device according to claim 1, **characterised in that** a protective valve and a valve for creating overpressure in the housing are arranged on the upper panel of the housing.

5. Device according to claim 4, **characterised in that** an adsorbent layer is placed under the upper panel of the housing, separated from the electrodes by a separator.

6. Device according to claim 1, **characterised in that** nozzles for supplying and releasing the electrolyte are arranged in the housing.

7. Device according to claim 1, **characterised in that** the charge-discharge converter comprises three filters, two of which are arranged at the entry and exit of the converter while the third is connected to the electrodes of the gas-electric battery, three pairs of symmetric two-way switches, a triple-wound transformer, a control unit activating a device for the formation of control voltages, and a control logic, wherein each of the filters is connected by one of its outlets to a pair of the two-way switches connected in-series to the ends of the windings, and by its other outlet to the centre of the winding, wherein the entry of the control unit is linked to sensors for the parameters of the gas-electric battery, while its control exit is linked to said switches.

8. Device according to claim 7, **characterised in that** the sensors for the parameters of the gas-electric battery activate sensors for voltage, current, temperature, pressure of the gases and the pH of the electrolyte solution.
